(19)

Europäisches
Patentamt
European
Patent Office
Office européen
des brevets

(11) **EP 2 221 336 A1**

(12) **EUROPEAN PATENT APPLICATION**

(43) Date of publication:
**25.08.2010  Bulletin 2010/34**

(51) Int Cl.:
*C08J 5/18* (2006.01)          *C08L 67/00* (2006.01)

(21) Application number: **10001591.6**

(22) Date of filing: **17.02.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **19.02.2009   JP 2009036061
19.02.2009   JP 2009036457
20.02.2009   JP 2009037264
13.03.2009   JP 2009060358**

(71) Applicant: **Mitsubishi Plastics, Inc.
Tokoy 103-0021 (JP)**

(72) Inventors:
• **Nozawa, Koutarou
Maibara-shi
Shiga 521-0234 (JP)**
• **Kojima, Takaaki
Maibara-shi
Shiga 521-0234 (JP)**
• **Aoile, Taku
Maibara-shi
Shiga 521-0234 (JP)**

(74) Representative: **Schweitzer, Klaus et al
Plate Schweitzer Zounek
Patentanwälte
Rheingaustrasse 196
65203 Wiesbaden (DE)**

(54) **Biaxially oriented polyester film with favorable light shielding properties, having hydrolysis resistance**

(57)    The invention relates to a polyester film with an elemental phosphorus concentration of from 0 to 170 ppm, wherein the film comprises a concentration of terminal carboxyl groups of 26 eq/ton or less. Furthermore the invention relates to a process for the manufacture of the polyester film and to its use.

**EP 2 221 336 A1**

**Description**

TECHNICAL FIELD

The present invention relates to a biaxially oriented polyester film with favorable light shielding properties, having hydrolysis resistance.

More specifically the present invention relates to a polyester film for sealing a back surface of a solar cell that can prevent, at a high level, degradation of the film of due to hydrolysis and can maintain favorable mechanical properties, even when used for long periods of time in high temperature and high humidity environments; and that can maintain light beam shielding properties and/or reflectivity for long periods of time.

RELATED TECHNOLOGY

In recent years, solar cells have become the focus of attention as a next-generation energy source, and development has been proceeding in the field of construction as well as electrical and electronic components. A film for sealing the back surface of a solar cell which is used in one component of a cell is required to increase the light electrical conversion efficiency of the cell, and even the reflected light from the back surface sealing film of the solar cell is converted to electricity. It is desirable that the total light transmission through the film is low, i.e. that the optical density (= transmission density) of the film is high. Furthermore, lightness of weight and ease in cell processing is also required.

Technology that provides shielding properties to a film by adding a white pigment to polyester in order to increase light reflection efficiency is conventionally known. For example, Japanese Unexamined Patent Application S63-137927 and Japanese Unexamined Patent Application H2-206622 disclose materials containing calcium carbonate, and Japanese Unexamined Patent Application S62-241928 and Japanese Unexamined Patent Application S63-193934 disclose materials containing titanium dioxide.

However, with the method of adding calcium carbonate, the refractive index of the pigment particle is small, so a large amount of particles must be added in order to demonstrate sufficient shielding power. As a result, this method has problems of increased costs and reduction of film strength, and currently, material suitable for the aforementioned applications cannot be obtained. In contrast, with the method of adding titanium dioxide particles, high shielding properties can be demonstrated at low concentrations by utilizing a high refractive index characteristic of these particles, and therefore use is widely recognized. However, titanium dioxide is relatively expensive and increases the apparent density of the film, so the film obtained has a cost disadvantage.

Furthermore, the metal in the white pigment acts as a decomposition catalyst, so if the formed film is manufactured having a high concentration of white pigment, the viscosity of the polyester will readily drop because of decomposition, film breaking will frequently occur when producing the film, and thus there is a tendency that producing the film will be difficult and film impact resistance will be insufficient. Additionally, there is a possibility that pinholes and cracking will occur due to application of external force during transport after modularizing the solar cell or after laminating with ethylene vinyl acetate (EVA), which is a solar cell protective material. Therefore, from a perspective of preventing decomposition of the resin, there is a requirement that only a small amount of white pigment be added. Specifically, there is desire to have improved light beam reflectivity corresponding to added quantities of white pigment.

Technology relating to a polyester film with high reflectivity, which is critical in the field of liquid crystal displays, is disclosed in Japanese Unexamined Patent Application 2006-212925. Although it is stated that reflectivity of the polyester film is increased by using barium sulfate and titanium dioxide as the white pigment, the material does not sufficiently satisfy the hydrolysis resistance most required in the field of films for sealing the back surface of a solar cell, and thus use in this field is restricted. Furthermore, achieving satisfactory performance for changes in light reflectivity over time is also not possible.

It is commonly known that using a pigment is effective for providing light shielding properties to polyester film. For example, technology has been disclosed as shown in Japanese Unexamined Patent Application 2002-302595 relating to a polyester film with favorable light shielding properties, wherein a polyester film is obtained by adding carbon black to polyester. However, because regenerated resins are mainly used, the film does not sufficiently satisfy the hydrolysis resistance most required in the field of films for sealing the back surface of a solar cell, and thus use in this field is limited.

Japanese Unexamined Patent Application 2003-152206 discloses technology relating to a film for sealing the back surface of a solar cell consisting of a black polyolefin film wherein a black pigment is added to a polyolefin that is inexpensive and does not undergo hydrolysis. However, polyolefins easily soften at high temperatures and do not have sufficient thermal resistance.

It is known that when polyester films are used in high temperature high humidity environments, hydrolysis of ester bond regions in molecule chains will occur, and mechanical properties will be degraded. Therefore, various investigations to control hydrolysis have been performed considering that polyester films may be used outdoors for long periods of time (20 years), or be used in high humidity environments.

Hydrolysis of polyester is known to occur at a faster rate as concentrations of terminal carboxyl groups in the polyester molecule chain increase. Technology that increases hydrolysis resistance by esterifying terminal carboxylic acids in molecule chains by using an epoxy compound, thus reducing the concentration of terminal carboxyl groups is disclosed in Japanese Unexamined Patent Application H9-227767. However, epoxy compounds induce gelling during a melt extrusion step of the film forming process or during a material recycle step, and thus there is a high possibility of foreign material being generated, which is undesirable from both an environmental and cost perspective.

Technology that reduces the concentration of terminal carboxyl groups by adding a carbodiimide such as polycarbodiimide is disclosed in Japanese Examined Patent Publication S38-152220, but carbodiimide itself is prone to thermal degradation, and depending on reaction conditions, induces a reduction in the physical properties of the polyester film, or causes foul odors due to a carbodiimide volatile component at a tenter exit during film forming.

Furthermore, hydrolysis of polyester is known to be accelerated in acidic and alkaline environments. (Kazuo Yuki, Handbook of Saturated Polyester Resins, Kosaido Co., Ltd., 1989.) Therefore, phosphorus compound stabilizers such as phosphoric acid and phosphorous acid that are added in order to prevent unfavorable coloring during a polymerization reaction are thought to have a negative effect on hydrolysis because the system is made acidic.

In order to resolve this problem, Japanese Unexamined Patent Application H8-3428 discloses technology that enhances hydrolysis resistance by suppressing terminal carboxylic acid to a specified concentration, and by containing a specified concentration of specific phosphate esters. However, the phosphate esters of this technology have a unique construction, so processing and associated expenses are required to produce the phosphate ester. Therefore, this technology is not suitable for providing a polyester film that is inexpensive and can be used outdoors for a long period of time (20 years).

Further technology has been disclosed that uses a fluorine film as a film, as shown in Japanese Unexamined Patent Application H11-186575 for example, for sealing the back surface of a solar cell. However, fluorine films are expensive so there is a problem that the price of the film for sealing the back surface of a solar cell will also be expensive.

SUMMARY OF THE INVENTION

Problem to be solved by the Invention

In light of the foregoing, an objective of the present invention is to provide a polyester film, specifically one for sealing the back of a solar cell, that can prevent, at a high level, degradation of the film due to hydrolysis even when used for a long period of time in an environment at high temperature and high humidity, and furthermore, can maintain favorable mechanical properties, that has highly satisfactory light shielding properties and/or that has little change in light beam reflectivity over time.

The above problem is solved by a polyester film with an elemental phosphorus concentration of from 0 to 170 ppm, the film further including a black pigment or 0.5 weight% or more of a white pigment, preferably titanium dioxide and a concentration of terminal carboxyl groups is 26 eq/ton or less, and wherein preferably the value IV_P expressed in the following formula (1) is 0.57 or higher

$$IV\_P = IV\_L \div (1 - X/100) \qquad (1)$$

wherein, IV_L represents a limit viscosity of the polyester film, and X represents the white pigment concentration (weight%).

With the present invention, the polyester that is used in the polyester film refers to a polyester obtained by polymer condensation of an aromatic dicarboxylic acid and an aliphatic glycol. Examples of the aromatic dicarboxylic acid include terephthalic acid and 2,6-naphthalenedicarboxylic acid, and examples of the aliphatic glycol include ethylene glycol, diethylene glycol, 1,4-cyclohexane dimethanol, and the like. Examples of representative polyesters include polyethylene terephthalate (PET), polyethylene-2,6-naphthalene dicarboxylate (PEN), and the like.

The polyester film of the present invention contains a specific range of elemental phosphorus as detected by analysis using a fluorescent x-ray analyzer that is described later. The elemental phosphorus is normally derived from phosphate compounds, and is added while manufacturing the polyester. With the present invention, a concentration of the elemental phosphorus in the polyester component must be in a range from 0 to 170 ppm, preferably in a range from 50 to 170 ppm, and more preferably in a range from 50 to 150 ppm. A high level of hydrolysis resistance can be provided to the film if this specific concentration of the elemental phosphorus is met.

If the concentration of the elemental phosphorus is too high, hydrolysis will be promoted, which is not preferable.

Examples of the phosphate compounds include phosphoric acid, phosphorous acid and esters thereof, phosphonate compounds, phosphinate compounds, phosphonite compounds, phosphinite compounds, and the like. Publicly known specific examples include orthophosphoric acid, dimethyl phosphate, trimethyl phosphate, diethyl phosphate, triethyl phosphate, dipropyl phosphate, tripropyl phosphate, dibutyl phosphate, tributyl phosphate, diamyl phosphate, triamyl phosphate, dihexyl phosphate, trihexyl phosphate, diphenyl phosphate, triphenyl phosphate, ethyl azide phosphate, and the like.

Furthermore, in order to suppress thermal decomposition and hydrolysis, metal compounds that can act as a catalyst are preferably not included as far as possible. However, in order to reduce volumetric resistivity when melting so as to improve the producibility of the film, metals such as magnesium, calcium, lithium, or manganese can normally be included in the polyester component so long as the concentration is 300 ppm or less and preferably 250 ppm or less. Furthermore, if a method that uses the master batch method or the like is used in order to add the particles or various types of additives as described below, antimony can also be added as a metal component polymerization catalyst, but a concentration of antimony in the entire polyester component is preferably 400 ppm or less in order to achieve the excellent hydrolysis resistance and weathering resistance of the present invention. Note, metal compounds referred to herein do not include particles that are added to the polyester as described later.

Additionally, the concentration of terminal carboxyl groups in the polyester component that forms the film obtained by the present invention is 26 eq/ton or less and preferably 24 eq/ton or less. If the concentration of terminal carboxyl groups exceeds 26 eq/ton, hydrolysis resistance of the polyester component will be inferior. On the other hand, while there is no lower limit to the concentration of terminal carboxyl groups of the polyester component in consideration of hydrolysis resistance of the invention of the present application, normally the lower limit is approximately 10 eq/ton from a perspective of the efficiency of the polymerization condensation reaction, thermal decomposition, and the like during the melting and extruding process.

Hydrolysis resistance of the polyester film is a property related to the entire film, and with the present invention, the concentration of terminal carboxyl groups of the entire polyester component that composes the film must be within the aforementioned range for films which have a laminate construction due to coextrusion. Similarly, with the invention of the present application, if the film has a laminate construction due to coextrusion, a concentration of phosphorus that must be contained as a catalyst must be within the aforementioned range with regards to the entire polyester component that is in the film.

The black pigment in the polyester film can be of one or more types including carbon black (channel, furnace, acetylene, thermal, and the like), carbon nanotubes (single layer or multilayer), aniline black, black iron oxide, and other black pigments. Of these, uses of carbon black and black iron oxide are preferable, and the use of carbon black is especially preferable.

An amount of black pigment in the polyester film is preferably 0.1 g or more per 1 $m^2$, preferably 0.2 g or more per 1 $m^2$ of polyester film.

If the concentration of black pigment is less than 0.1 $g/m^2$, color properties and shielding properties of the film will be insufficient, and an effect of the present invention will not be achieved. An upper limit is not particularly established, but if the amount exceeds 10 g per 1 $m^2$, the shielding properties will become saturated, the effect of additional pigment will be difficult to notice, and there will be cost disadvantages.

The method of adding the black pigment to the polyester film is not particularly restricted, and any conventional commonly known method can be used. For example, adding can be performed at any stage of manufacturing the polyester component, but adding during an esterfication stage or after completion of an ester exchange reaction is preferable, following which a polymer condensation reaction can proceed. For example, the polyester raw material and a slurry of black pigment dispersed in ethylene glycol or water or the like can be blended using a vented kneader extruder. Furthermore, a method of blending the polyester raw material and dried black pigment using a kneader extruder is also acceptable. Note, so-called master batch chips containing a high concentration of black pigment can be manufactured using a kneader extruder, and if necessary, a polyester film with a prescribed amount of black pigment can be manufactured by blending the required amount of these master batch chips with polyester raw material that either contains no black pigment or contains only a small amount of black pigment, using a kneader extruder.

In order to increase solar light electricity conversion efficiency of a solar cell, light that impinges on the film for sealing the back surface of the solar cell must be returned to the solar cell element to increase electrical power conversion efficiency. In order to achieve these reflective characteristics, preferably either the polyester film has high haze, or the polyester film is colored white. With the present invention, examples of the white pigment in the polyester component that forms the polyester film include titanium dioxide, barium sulfate, calcium carbonate, and the like. There is generally no restriction to these so long as the film can be used as a white polyester film; but if the film is to be used for a long period of time in an environment of high humidity and high temperature such as in a solar cell, the use of titanium dioxide which has a higher maintenance ratio with regards to changes in light beam reflectivity over time is particularly preferable. Note that a surface of the white pigment can be surface treated in order to improve brightness and the like.

An average particle size of the white pigment is preferably 0.25 $\mu$m or larger, more preferably 0.28 $\mu$m or larger, and particularly preferably 0.30 $\mu$m or larger. If the average particle size is less than 0.25 $\mu$m, a wavelength of

light that can be effectively scattered will be shifted to a low wavelength side, so reflectivity might be reduced in a near infrared region. If the average particle size of the white pigment exceeds 10 μm, defects such as occurrences of pinholes may occur in the film because coarse particles might be included depending on particle size distribution. Therefore, the average particle size of the white pigment is preferably 10 μm or less.

An amount of the white pigment added is 0.5 weight% or higher, preferably from 3 to 50 weight%, and more preferably from 5 to 30 weight%. If the amount of the white pigment added is less than 0.5 weight%, light beam reflectivity will be reduced, and an effect of improving electricity generating efficiency will be smaller. On the other hand, if the amount added exceeds 50 weight%, the film will be brittle, and practical mechanical strength cannot be achieved.

Methods of adding the white pigment to the polyester film are not particularly restricted, and any conventional commonly known method can be used. For example, adding can be performed at any stage of manufacturing the polyester component, but adding during an esterfication stage or after completion of an ester exchange reaction is preferable, following which polymer condensation reaction can proceed. For example, a polyester raw material and a slurry of the white pigment dispersed in ethylene glycol or water or the like can be blended using a vented kneader extruder. Furthermore, a method of blending the polyester raw material and dried white pigment using a kneader extruder is also acceptable. Note, so-called master batch chips containing a high concentration of the white pigment can be manufactured using a kneader extruder, and if necessary, a polyester film with a prescribed amount of the white pigment can be manufactured by blending a required amount of these master batch chips with polyester raw material that either contains no white pigment or contains only a small amount of the white pigment, using a kneader extruder.

The limiting viscosity (η) of the raw material polyester used in the polyester film of the present invention is normally from 0.64 to1.20 dl/g and preferably from 0.69 to 0.90 dl/g. A limiting viscosity of the polyester of 0.64 dl/g or higher is preferable from a perspective of long-term durability and hydrolysis resistance; moreover, melting stress when kneading the polyester will be high, so the white pigment can easily be effectively dispersed. The result is that shielding performance of the polyester film obtained is higher, and thus light beam reflectivity is increased. On the other hand, if a polyester resin with a limiting viscosity of 1.20 dl/g or less is not used, melting stress during kneading will be too high, and there is a tendency that producibility of the film will be degraded.

Furthermore, the film obtained by the present invention has a value for IV_P as defined by the following equation that is 0.57 dl/g or higher, preferably 0.60 dl/g or higher.

$$IV\_P = IV\_L \div (1 - X/100) \qquad (1)$$

(wherein, IV_L represents the limiting viscosity η of the polyester film, and X represents the white pigment concentration (weight%).)

If the IV_P value of the polyester film is 0.57 dl/g or higher, the long-term durability and hydrolysis resistance will be favorable. If the value for IV_P is less than 0.57 dl/g, light beam reflectivity of the polyester component will be inferior. On the other hand, in consideration of the brightness of the invention of the present application, while there is no upper limit to the polyester component IV_P value of the polyester component, the upper limit is approximately 1.0 dl/g from perspectives of efficiency of the polymerization condensation reaction and preventing an increase in pressure during the melting extrusion process.

Particles that can provide lubricity can be added to the film of the present invention as necessary primarily for the purpose of providing lubricity. The types of particles added are not particularly restricted so long as the particles can provide lubricity. Specific examples include particles of silica, calcium carbonate, magnesium carbonate, barium carbonate, calcium sulfate, calcium phosphate, magnesium phosphate, silicon oxide, kaolin, aluminum oxide, and the like. Furthermore, heat resistant organic particles as disclosed in Japanese Examined Patent Publication S59-5216 and Japanese Unexamined Patent Application S59-217755 can also be used. Other examples of the heat resistant organic particles include thermosetting urea resin, thermosetting phenol resin, benzoguanamine resin, and the like. Furthermore, precipitate particles where a portion of the metal compounds such as catalysts precipitate and are finely dispersed can also be used during the polyester manufacturing process.

Furthermore, shapes of the particles used are not particularly restricted, and spherical, block-like, rod-shaped, or flat shaped particles can be used. Furthermore, hardness, specific gravity, color, and the like are not particularly restricted either. Two or more types of this group of particles can be used together if necessary.

Furthermore, normally an average particle size of the particles that are used is preferably from 0.01 to 10 μm. If the average particle size is less than 0.01 μm, an effect of providing lubricity to the film might be insufficient. On the other hand, if the average particle size exceeds 10 μm, breaking will frequently occur during film production, and producibility may be inferior.

Note, in addition to these particles, commonly known antioxidants, thermal stabilizers, lubricating agents, antistatic agents, florescent whiteners, and dyes can be added to the polyester film of the present invention if necessary.

Furthermore, from 0.01 to 5 weight parts of a UV absorber, particularly a benzoxazinone based UV absorber or the like can be added to the polyester component in order to increase weathering resistance.

A thickness of the polyester film of the present invention is not particularly restricted so long as the thickness is within a range where a film can be manufactured, but normally the thickness is from 20 to 250 μm and preferably in a range from 25 to 200 μm. For films containing a black pigment typical thickness is from 10 to 500 μm and preferably in a range from 15 to 400 μm

A specific example of the method for manufacturing the polyester film of the present invention is described below, but the present invention is not particularly restricted to the following example so long as the gist of the present invention is satisfied.

Specifically, according to a commonly known method, dried or undried polyester chips (polyester component) and the white pigment or a master batch containing a high concentration of the white pigment are fed into a kneader extruder and melted by heating to a temperature no lower than a melting point of the polyester component. Next, the melted polyester is extruded from a die, and then rapidly hardened by reducing the temperature to a glass transition temperature or lower on a rotating cooling drum to obtain an unoriented sheet in essentially a noncrystalline state. In this case, increasing adhesion between the sheets and the rotating cooling drum is preferable in order to increase flatness of the sheet, so a static electric application adhering method and/or a liquid application adhering method is preferably used with the present invention. Depending on conditions, concentration of terminal carboxyl groups will increase in the melting and extruding processes. Therefore, with the invention of the present application, various methods are used, such as minimizing residence time of the polyester in the extruder during the extrusion process; in a case where a single screw extruder is used, sufficiently drying the raw materials beforehand so that a moisture content is 50 ppm or less and preferably 30 ppm or less; and, in the case that a twin screw extruder is used, providing a vent port and maintaining a reduced pressure of 40 hectopascals or less, preferably 30 hectopascals or less, and more preferably 20 hectopascals or less.

With the present invention, the sheet obtained in this manner is stretched in two axial directions to form a film. Specific examples of stretching conditions include preferably stretching the unstretched sheet in the longitudinal direction from 2 to 6 times at a temperature from 70 to 145˚C, and after the film has been stretched in one longitudinal direction, stretching in the lateral direction from 2 to 6 times at a temperature from 90 to 160˚C, and then preferably heat treating at a temperature from 160 to 220 ˚C for from 1 to 600 seconds; the black pigment containing films may be heat treated at a temperature from 160 to 240 ˚C for from 1 to 600 seconds.

Furthermore, at this time, a method that allows relaxing of from 0.1 to 20% in the longitudinal direction and/or lateral direction during a highest temperature zone of the heat treatment and/or during a cooling zone at a heat treatment exit is preferable. Furthermore, restretching in the lateral direction and restretching in the longitudinal direction can be performed if necessary.

With the present invention, two layers, three layers, or more of laminate film can be formed by a so-called coextrusion method using two, three, or more polyester melting extruders. A construction of the layer can be an A/B construction or an A/B/A construction using raw material A and raw material B, or an A/B/C construction by also using raw material C, or a film of another construction can be used.

With the present invention, a coating layer can be formed on one surface or both surfaces, or an electric discharge process such as corona processing can be performed either during or after the stretching process in order to provide the film with adhesion, antistatic properties, lubricity, release properties, or the like

The polyester layer containing the black pigment can be selected from any layer. Specifically, the black pigment may be present in middle layers, present in a surface layer on one side or both sides, or present in both the surface layers and the middle layers.

With the present invention, maintaining the concentration of terminal carboxyl groups of the polyester component and optionally the IV_P value within specific ranges is performed, for example, by shortening the residence time of the composition containing polyester component and the white or black pigment in the extruder during the polyester chip extruding process. Furthermore, a polyester film having a polyester component with a concentration of terminal carboxyl groups and preferably the IP_V value within a specific range may be obtained by forming a film using a composition made from white or black pigment and polyester chips with a low concentration of terminal carboxyl groups. A method for reducing the concentration of terminal carboxyl groups in the polyester chips can be a commonly known method such as a method of increasing a polymerization efficiency or a method of accelerating a polymerization rate, or a method of suppressing a decomposition rate or the like. For example, a method of shortening the polymerization time, a method of increasing the concentration of polymerization catalyst, a method of using a high activity polymerization catalyst, or a method of reducing the polymerization temperature or the like can be used. Furthermore, if regenerated raw material that has passed through the melting process is added during film manufacturing the value for IP_V will drop and the concentration of terminal carboxyl groups will increase. Therefore, with the invention of the present application, regenerated raw material is preferably not added, and if added, the concentration is preferably 20 weight parts or less, more preferably 40 weight% or less.

Effect of the Invention

According to the present invention, a polyester film is provided that can prevent, at a high level, degradation of the film due to hydrolysis and that can maintain favorable mechanical properties, even when used for long periods of time in high temperature and high humidity environments; and that can maintain favorable light shielding properties or light beam reflectivity for long periods of time. Such films can be used for sealing a back surface of a solar cell.

BEST MODE FOR CARRYING OUT THE INVENTION

The present invention will be described in further detail by presenting the following embodiments. Note, methods for measuring and evaluating the various properties of the film are shown below.

(1) Concentration of Black Pigment per 1 $m^2$ of Polyester Film

The concentration of black pigment in 1 $m^2$ of polyester film was measured. Specifically, the black pigment weight ratio (weight%) and the concentration ($g/m^2$) of black pigment per 1 $m^2$ were calculated from a value obtained by sampling and weighing 100 $cm^2$ of polyester film and the weight of only an insoluble portion remaining after dissolving 100 $cm^2$ of the polyester film in benzyl alcohol.

(2) Concentration of Terminal Carboxyl Groups (eq/ton)

Concentration of terminal carboxyl groups was measured by the so-called titration method. Specifically, the polyester film was dissolved in benzyl alcohol, phenol red indicator was added, and then titration was performed using a water/methanol/benzyl alcohol solution of sodium hydroxide. Note, if a white pigment such as titanium dioxide or barium sulfate was included in the polyester film, the concentration of terminal carboxyl groups (eq/ton) in the polyester component was determined by titrating a solution where the white pigment, which is an insoluble component in benzyl alcohol, was removed by a centrifugal sedimentation method.

(3) Quantitative Determination of Elements from Catalysts

Concentrations of elements in the film were determined by measuring a single sheet under the conditions shown in the following Table 1 using a fluorescent x-ray analyzer (Model "XRF-1500", manufactured by Shimadzu Corporation). For the case of a laminate film, concentration in the entire film was measured by melting the film, forming it into a disk shape and then measuring it. Note, if a white pigment such as titanium dioxide or barium sulfate is included in the polyester film, a peak from titanium elements and barium elements will be detected. Therefore, quantitative determination of the elements from the catalysts in the polyester component was performed after removing the white pigment fraction from the entire sample.

**Table 1**

|  | Sb | P | Ti | Ba |
|---|---|---|---|---|
| X-ray tube target | Rh 4.0 kW | Rh 4.0 kW | Rh 4.0 kW | Rh 4.0 kW |
| Voltage (kV) | 40 | 40 | 40 | 40 |
| Current (mA) | 95 | 95 | 95 | 95 |
| Analyzing crystal | LiF | Ge | LiF | LiF |
| Detector | FPC | FPC | SC | SC |
| 2θ (deg) | 117.34 | 141.03 | 86.14 | 87.17 |
| Measurement time (sec) 2 point background 20 seconds each | 40.0 | 40.0 | 40.0 | 40.0 |

(4) Limiting Viscosity

1 g of the polyester film was accurately weighed and dissolved in a solvent of phenol/tetrachloroethane = 50/50 (weight parts) to produce a solution with a concentration c = 0.01 g/cm³, and then the relative viscosity $\eta_r$ compared to the solvent was measured at 30°C to determine the limiting viscosity $\eta$ and (IV_L) of the polyester film.

The value for IV_P was determined from the weight% (X) of the white pigment included using the following formula.

$$IV\_P = IV\_L / (1 - X/100)$$

(5) Hydrolysis Resistance Test

The polyester film was treated for 35 hours in an environment at 120°C x 100% relative humidity using a personal pressure cooker (manufactured by Hirayama Manufacturing Corporation).

(6) Tensile Break Elongation

As a mechanical property of the film, the break elongation was measured at a rate of 200 mm/minute in the film forming direction (MD direction) of the film obtained using an autograph AG-I (manufactured by Shimadzu Corporation). A maintenance ratio (%) of the break elongation before and after treatment was calculated by the following equation, and evaluated by the following criteria:

$$\text{Break elongation maintenance ratio (\%)} = \text{break elongation after treatment / break elongation before treatment x 100}$$

◎: Maintenance ratio is 80% or higher
○: Maintenance ratio is from 60 to 80%
△: Maintenance ratio is from 30 to 60%
✕: Maintenance ratio is less than 30%

(7) Evaluation of Light Beam Reflectivity

Reflectivity was measured at a light wavelength of 500 nm by a reflection method using a UV-3100 (manufactured by Shimadzu Corporation).

(8) Evaluation of Whole Light Beam Transmissivity

Whole light beam transmissivity was measured in accordance with JIS-K-7105 using an integrating sphere type turbidity meter "NDH-2000" (manufactured by Nippon Denshoku Industries Co). The physical property values obtained were evaluated according to the following criteria:

○: Whole light beam transmissivity is less than 14%
△: Whole light beam transmissivity is from 14 to 15%
✕: Whole light beam transmissivity is 15% or higher

The maintenance ratio (%) of whole light beam transmissivity before and after treatment was calculated by the following equation, and evaluated by the following criteria.
(A more positive value indicates an increase in whole light transmissivity.)

$$\text{Whole light transmissivity maintenance ratio [\%]} = (\text{whole light transmissivity after treatment - whole light transmissivity before treatment}) \div \text{Hole transmissivity before treatment x 100}$$

○: Maintenance ratio is less than 10%
×: Maintenance ratio is 10% or higher

(9) Evaluation of Transmission Density

A single layer of film was measured using a Macbeth TD-904 densitometer. Larger values indicate higher shielding properties. The value was read after the display value stabilized.

(10) Visable Light Beam Transmissivity

Visible light beam transmissivity was calculated using a UV-3100 manufactured by Shimadzu Corporation. Visible light beam transmissivity at a wavelength of 550 nm was evaluated according to the following criteria:

◎: Visable light beam transmissivity is less than 10%
○: Visable light beam transmissivity is from 10 to 35%
△: Visable light beam transmissivity is from 35 to 50%
×: Visable light beam transmissivity is more than 50%

Manufacturing Method for Polyester (1)

100 weight parts of dimethyl terephthalate and 60 weight parts of ethylene glycol as starting raw materials, and 0.09 weight parts of calcium acetate as a catalyst were placed in a reaction vessel. A reaction start temperature was 150˚C. The reaction temperature was gradually increased in conjunction with evaporation of methanol, and the temperature was 230˚C after 3 hours.

After 4 hours, an ester exchange reaction was essentially completed. 0.04 parts of antimony trioxide and 0.08 weight parts of silica particles with an average particle size of 2.6 $\mu$m dispersed in ethylene glycol were added to the reaction mixture, and a polymerization condensation reaction was performed for 4 hours. Specifically, the temperature was gradually increased from 230˚C to 280˚C. Furthermore, the pressure was gradually reduced from ambient pressure to a final pressure of 40 Pa. After the reaction started, the reaction was stopped when a limiting viscosity reached 0.60, by changing a mixing power of a reaction tank, and polyester was discharged under pressurized nitrogen. The limiting viscosity of the polyester (1) obtained was 0.60, and a concentration of terminal carboxyl groups in the polymer was 35 eq/ton.

Manufacturing Method for Polyester (2)

Polyester (2) was obtained by performing solid phase polymerization in a vacuum at 220˚C using polyester (1) as the starting raw material. The limiting viscosity of polyester (2) was 0.74, and the concentration of terminal carboxyl groups in the polymer was 9 eq/ton.

Manufacturing Method for Polyester (3)

Polyester (3) was obtained by the same method except that the 0.04 parts of antimony trioxide and the 0.08 weight parts of silica particles with an average particle size of 2.6 $\mu$m dispersed in ethylene glycol were added to the reaction mixture after first adding 0.03 parts of orthophosphoric acid after the ester exchange reaction when manufacturing polyester (1). The limiting viscosity of the polyester (3) obtained was 0.63, and the concentration of terminal carboxyl groups in the polymer was 14 eq/ton.

Manufacturing Method for Polyester (4)

Polyester (4) was obtained by performing solid phase polymerization in a vacuum at 220˚C using polyester (3) as the starting raw material. The limiting viscosity of polyester (4) was 0.69, and the concentration of terminal carboxyl groups in the polymer was 12 eq/ton.

Manufacturing Method for Polyester (5)

100 weight parts of dimethyl terephthalate and 60 weight parts of ethylene glycol as starting raw materials, and 0.02 weight parts of magnesium acetate tetrahydrate as a catalyst were placed in the reaction vessel, the reaction start temperature was 150˚C. The reaction temperature was gradually increased in conjunction with evaporation of the methanol, and the temperature was 230˚C after 3 hours. After 4 hours, the ester exchange reaction was essentially completed. After adding 0.03 parts of ethyl azide phosphate to the reaction mixture, the mixture was transferred to a polymerization condensation tank, and then 0.04 parts of antimony trioxide was added and the polymerization condensation reaction was performed for 4 hours. Specifically, the temperature was gradually increased from 230˚C to 280˚C. Furthermore, the pressure was gradually reduced from ambient pressure to a final pressure of 0.3 mm Hg. After the reaction started, the reaction was stopped when the limiting viscosity reached 0.63, by changing the mixing power of the reaction tank, and then the polymer was discharged under pressurized nitrogen to obtain polyester chips (5). The limiting viscosity of the polyester was 0.63, and the concentration of terminal carboxyl groups in the polymer was 51 eq/ton.

Manufacturing Method for Polyester (6)

Polyester (6) was obtained by performing solid phase polymerization in a vacuum at 220˚C using polyester (5) as the starting raw material. The limiting viscosity of polyester (6) was 0.85, and the concentration of terminal carboxyl groups in the polymer was 45 eq/ton.

Manufacturing Method of Titanium Dioxide Master Batch (T-MB)

Master batch (T-MB) was obtained by melting and mixing 60 weight parts of polyester (2) and 40 weight parts of titanium dioxide particles with an average particle size of 0.45 μm using standard methods in an extruder at 290˚C.

Manufacturing Method of Titanium Dioxide Master Batch (T-MB1)

Master batch (T-MB1) was obtained by melting and mixing 60 weight parts of the polyester (2) and 40 weight parts of titanium dioxide particles with an average particle size of 0.45 μm using standard methods in an extruder at 290˚C.

Manufacturing Method of Titanium Dioxide Master Batch (T-MB2)

Master batch (T-MB2) was obtained by melting and mixing 60 weight parts of the polyester (5) and 40 weight parts of titanium dioxide particles with an average particle size of 0.45 μm using standard methods in an extruder at 290˚C.

Manufacturing Method of Barium Sulfate Master Batch (B-MB)

Master batch (B-MB) was obtained by melting and mixing 60 weight parts of polyester (2) and 40 weight parts of barium sulfate particles with an average particle size of 0.3 μm using standard methods in an extruder at 290˚C.

Manufacturing Method of Carbon Black Master Batch (B-MB1)

A carbon black master batch (B-MB 1) was obtained by feeding the aforementioned polyester (2) into a vented twin screw extruder, and then feeding carbon black (oil furnace black, average primary particle size 70 nm) to make 20 weight%.

Manufacturing Method of Carbon Black Master Batch (B-MB2)

A carbon black master batch (B-MB2) was obtained by feeding the polyester (5) into a vented twin screw extruder, and then feeding carbon black (oil furnace black, average primary particle size 70 nm) to make 20 weight%.

Embodiment 1

A mixture where 60 weight parts of the titanium dioxide master batch (T-MB1) were added to a polyester raw material containing a mixture of the polyester (2) and polyester (3) at a ratio of 80:20 was melted and extruded at 290˚C using a vented twin screw extruder, and then rapidly cooled and hardened on a casting drum with a surface temperature set at 40˚C using an electrostatic application adhesion method to obtain an unstretched sheet.
The sheet obtained was stretched 3.7 times in the longitudinal direction at 83˚C, fed into a tenter, stretched 3.9 times in the lateral direction at 110˚C, and then heat treated at 220˚C. An average thickness of the film obtained was 50 μm. Characteristics and evaluation results of the film obtained are shown in the following Table 2.

Embodiment 2

A film was obtained by the same method as embodiment 1, except that the polyester raw material in the mixture was changed to the polyester (2). The characteristics and evaluation results of the film obtained are shown in the following Table 2.

Embodiment 3

A film was obtained by the same method as embodiment 1, except that the polyester raw material in the mixture was changed to a blend of polyester (2) and polyester (4) at a ratio of 40:60. The characteristics and evaluation results of the film obtained are shown in the following Table 2.

**Comparative Example 1**

A film was obtained by the same method as embodiment 1, except that the polyester raw material in the mixture was changed to a blend of polyester (1) and polyester (3) at a ratio of 40:60, and the titanium dioxide master batch (T-MB 1) of the mixture was changed to titanium dioxide master batch (T-MB2). The characteristics and evaluation results of the film obtained are shown in the following Table 2.

**Comparative Example 2**

A film was obtained by the same method as embodiment 1, except that the polyester raw material in the mixture was changed to the polyester (6). The characteristics and evaluation results of the film obtained are shown in the following Table 2.

**Comparative Example 3**

A film was obtained by the same method as embodiment 1, except that the polyester raw material in the mixture was changed to the polyester (3). The characteristics and evaluation results of the film obtained are shown in the following Table 2.

**Comparative Example 4**

A film was obtained by the same method as embodiment 1, except that the polyester raw material in the mixture was changed to the polyester (2), and the concentration of titanium dioxide master batch (T-MB1) in the mixture was changed to 1 weight part. The characteristics and evaluation results of the film obtained are shown in the following Table 2.

## Table 2

| | | | Embodiments | | | Comparative Examples | | | |
|---|---|---|---|---|---|---|---|---|---|
| | | | 1 | 2 | 3 | 1 | 2 | 3 | 4 |
| Formulation Ratio | Polyester | 1 | - | - | - | 25.0 | - | - | - |
| | | 2 | 50.0 | 62.5 | 25.0 | - | - | - | 99.0 |
| | | 3 | 12.5 | - | - | 37.5 | - | 62.5 | - |
| | | 4 | - | - | 37.5 | - | - | - | - |
| | | 5 | - | - | - | - | - | - | - |
| | | 6 | - | - | - | - | 62.5 | - | - |
| | T-MB1 | | 37.5 | 37.5 | 37.5 | - | 37.5 | 37.5 | 10.0 |
| | T-MB2 | | - | - | - | 37.5 | - | - | - |
| | Concentration of terminal carboxyl groups (eq/ton) | | 22 | 22 | 23 | 38 | 50 | 33 | 20 |
| | Concentration of catalyst (ppm) | P | 29 | 0 | 88 | 91 | 138 | 255 | 0 |
| | | Sb | 334 | 334 | 334 | 322 | 342 | 334 | 334 |
| | IV_L | | 0.5408 | 0.5545 | 0.5358 | 0.4453 | 0.6233 | 0.4858 | 0.6751 |
| | Particle concentration (%) | | 15 | 15 | 15 | 15 | 15 | 15 | 0.40 |
| | IV_P | | 0.6362 | 0.6524 | 0.6303 | 0.5238 | 0.7332 | 0.5715 | 0.6778 |
| | Tensile elongation maintenance ratio | | ◎ | ○ | ○ | × | × | × | ○ |
| | Light beam reflectivity | Value | 88.3 | 87.3 | 88.1 | 86.2 | 89.7 | 86.9 | 30.6 |
| | | Evaluation | ○ | ○ | ○ | × | ○ | × | × |
| | Whole light beam transmissivity | Value | 13.0 | 12.3 | 13.2 | 16.1 | 12.2 | 14.6 | 75.3 |
| | | Evaluation | ○ | ○ | ○ | × | ○ | △ | × |
| | Transmission Density | Value | 0.86 | 0.88 | 0.85 | 0.77 | 0.89 | 0.81 | 0.13 |
| | | Evaluation | ○ | ○ | ○ | × | ○ | △ | × |

The Light Beam Reflectivity values obtained were evaluated according to the following criteria:

○: Reflectivity is 87% or higher

×: Reflectivity is less than 87%

The Transmission density values obtained were evaluated according to the following criteria:

○: Transmission density is 0.82 or higher.
△: Transmission density is from 0.80 to 0.82.
×: Transmission density is less than 0.80

In Table 2, the units for the formulation ratios are in weight%, and the concentration of terminal carboxyl groups and the concentration of catalyst are amounts in the polyester component.

From the above results, it can be seen that a polyester film was obtained where favorable reflectivity and low whole light transmissivity were achieved as the IV_P value increased. Furthermore, it can be seen that a polyester film where the concentration of terminal carboxyl groups and the concentration of elemental phosphorus are within a specific range will also have favorable tensile properties after hydrolysis testing.

Embodiment 4

A mixture where 60 weight parts of the titanium dioxide master batch (T-MB) were added to a polyester raw material containing a mixture of polyester (2) and polyester (3) at a ratio of 80:20 was melted and extruded at 290˚C using a vented twin screw extruder, and then rapidly cooled and hardened on a casting drum with a surface temperature set at 40˚C using an electrostatic application adhesion method to obtain an unstretched sheet. The sheet obtained was stretched 3.7 times in the longitudinal direction at 83˚C, fed into a tenter, stretched 3.9 times in the lateral direction at 110˚C, and then heat treated at 220˚C. An average thickness of the film obtained was 50 μm. The characteristics and evaluation results of the film obtained are shown in the following Table 3.

Embodiment 5

A film was obtained by the same method as embodiment 1, except that the polyester raw material in the mixture was changed to polyester (2). The characteristics and evaluation results of the film obtained are shown in the following Table 3.

Embodiment 6

A film was obtained by the same method as embodiment 1, except that the polyester raw material in the mixture was changed to a blend of polyester (2) and polyester (4) at a ratio of 40:60. The characteristics and evaluation results of the film obtained are shown in the following Table 3.

Embodiment 7

A film was obtained by the same method as embodiment 1, except that the polyester raw material in the mixture was changed to a blend of polyester (2) and polyester (4) at a ratio of 80:20, and the amount of titanium oxide master batch (T-MB) in the mixture was changed to 20 weight parts. The characteristics and evaluation results of the film obtained are shown in the following Table 3.

**Comparative Example 5**

A film was obtained by the same method as embodiment 1, except that the polyester raw material in the mixture was changed to a blend of polyester (1), polyester (2), and polyester (4) at a ratio of 20:10:70. The characteristics and evaluation results of the film obtained are shown in the following Table 4.

**Comparative Example 6**

A film was obtained by the same method as embodiment 1, except that the polyester raw material in the mixture was changed to a blend of polyester (1) and polyester (3) at a ratio of 40:60. The characteristics and evaluation results of the film obtained are shown in the following Table 4.

**Comparative Example 7**

A film was obtained by the same method as embodiment 1, except that the polyester raw material in the mixture was changed to polyester (4), and the amount of titanium oxide master batch (T-MB) in the mixture was changed to 10.0 weight parts. The characteristics and evaluation results of the film obtained are shown in the following Table 4.

**Comparative Example 8**

A film was obtained by the same method as embodiment 1, except that the titanium master batch (T-MB) in the mixture was changed to the barium sulfate master batch (B-MB). The characteristics and evaluation results of the film obtained are shown in the following Table 4.

Table 3

| | | | Embodiment 4 | Embodiment 5 | Embodiment 6 | Embodiment 7 |
|---|---|---|---|---|---|---|
| Formulation Ratio | Polyester (weight%) | 1 | — | — | — | — |
| | | 2 | 50.0 | 62.5 | 25.0 | 66.7 |
| | | 3 | 12.5 | — | — | — |
| | | 4 | 0.0 | 0.0 | 37.5 | 16.7 |
| | T-MB (weight%) | | 37.5 | 37.5 | 37.5 | 16.7 |
| | B-MB (weight%) | | — | — | — | — |
| Evaluation | Concentration of terminal carboxylic acid (eq/ton) | | 22 | 22 | 23 | 22 |
| | Concentration of catalyst [ppm] | P | 29 | 0 | 88 | 36 |
| | | Sb | 334 | 334 | 334 | 334 |
| | Tensile Break Elongation Maintenance Ratio | | ○ | ○ | ◎ | ◎ |
| | Light Beam Reflectivity Maintenance Ratio | | ○ | ○ | ○ | ○ |
| | Whole Light Beam Transmissivity Maintenance Ratio | | ○ | ○ | ○ | ○ |
| | Transmission Density Maintenance Ratio | | ○ | ○ | ○ | ○ |

The maintenance ratio (%) of light beam reflectivity before and after treatment was calculated by the following equation, and evaluated by the following criteria. A more negative value indicates lower light beam reflectivity.

Light beam reflectivity maintenance ratio [%] = (reflectivity after treatment - reflectivity before treatment) ÷ reflectivity before treatment x 100

○: Maintenance ratio is higher than -3%
✕: Maintenance ratio is -3% or less

The maintenance ratio (%) of the transmission density before and after treatment was calculated by the following equation, and evaluated by the following criteria. More negative value indicates lower transmission density.

Transmission density maintenance ratio [%] = (transmission density after treatment - transmission density before treatment) ÷ transmission density before treatment x 100

○: Maintenance ratio is greater than -7%

×: Maintenance ratio is -7% or less

**Table 4**

| | | | Comparative Example 5 | Comparative Example 6 | Comparative Example 7 | Comparative Example 8 |
|---|---|---|---|---|---|---|
| Formulation Ratio | Polyester (weight%) | 1 | 12.5 | 25.0 | — | — |
| | | 2 | 6.3 | — | — | 50.0 |
| | | 3 | — | 37.5 | — | 12.5 |
| | | 4 | 43.8 | — | 90.9 | — |
| | T-MB (weight%) | | 37.5 | 37.5 | 9.1 | — |
| | B-MB (weight%) | | — | — | — | 37.5 |
| Evaluation | Concentration of terminal carboxylic acid (eq/ton) | | 29 | 36 | 24 | 23 |
| | Concentration of catalyst [ppm] | P | 119 | 120 | 188 | 25 |
| | | Sb | 334 | 334 | 334 | 334 |
| | Tensile Break Elongation Maintenance Ratio | | △ | × | △ | ◎ |
| | Light Beam Reflectivity Maintenance Ratio | | ○ | ○ | ○ | × |
| | Whole Light Beam Transmissivity Maintenance Ratio | | ○ | ○ | ○ | × |
| | Transmission Density Maintenance Ratio | | ○ | ○ | ○ | × |

In Table 4, the values for the concentration of terminal carboxyl groups and the concentration of catalyst are amounts in the polyester component.

Embodiment 8

A mixture where 2.6 weight parts of the aforementioned carbon black master batch (B-MB 1) was added to a polyester raw material containing a mixture of the polyester (2) and polyester (3) at a ratio of 80:20 was melted and extruded at 290°C using one vented twin screw extruder, and then rapidly cooled and hardened on a casting drum with a surface temperature set at 40°C using an electrostatic application adhesion method to obtain an unstretched single layer sheet. The sheet obtained was stretched 3.7 times in the longitudinal direction at 83°C, fed into a tenter, stretched 3.9 times in the lateral direction at 110°C, and then heat treated at 220°C. An average thickness of the film obtained was 50 μm. Characteristics and evaluation results of the film obtained are shown in the following Table 5.

Embodiment 9

A film was obtained by the same method as embodiment 1, except that the polyester raw material in the mixture was changed to the polyester (2). Characteristics and evaluation results of the film obtained are shown in the following Table 5.

Embodiment 10

A film was obtained by the same method as embodiment 1, except that the polyester raw material in the mixture was changed to a blend of polyester (2) and polyester (4) at a ratio of 40:60. Characteristics and evaluation results of the film obtained are shown in the following Table 5.

Embodiment 11

A film was obtained by the same method as embodiment 1, except that the polyester raw material in the mixture was changed to a blend of polyester (2) and polyester (3) at a ratio of 80:20, and the concentration of carbon black master batch (B-MB1) was changed to 0.9 weight parts. Characteristics and evaluation results of the film obtained are shown in the following Table 5.

Embodiment 12

A film was obtained by the same method as embodiment 4 without changing a formulation ratio of the mixture, but under film forming conditions of embodiment 4 a film forming rate was slowed 5 times. The average thickness of the film obtained was 250 $\mu$m. Characteristics and evaluation results of the film obtained are shown in the following Table 5.

Embodiment 13

A mixture where 2.6 weight parts of the carbon black master batch (B-MB1) was added to a polyester containing a mixture of the polyester (2) and polyester (3) at a ratio of 80:20 was directly injected into a vented twin screw extruder A (sub) and a polyester containing a mixture of the polyester (2) and polyester (3) at a ratio of 80:20 was directly injected into a vented twin screw extruder B (main). Both of the raw materials were melted and kneaded in the twin screw extruders at 290˚C, and the melts obtained were combined and slit extruded through a multilayer T-die to form and an A/B/A construction, and then rapidly hardened on a casting drum set to 40˚C to obtain an unstretched multilayer sheet made of two types of material in three layers. The unstretched sheet obtained was stretched 3.7 times in the longitudinal direction at 83˚C, fed into a tenter, stretched 3.9 times in the lateral direction at 110˚C, and then heat treated at 220˚C. The average thickness of the film obtained was 250 $\mu$m, and a component ratio of the A/B/A layers was 25/200/25. Characteristics and evaluation results of the film obtained are shown in the following Table 5.

Embodiment 14

A film was obtained by the same method as embodiment 1, except that the amount of carbon black master batch in the mixture was changed to 0.65 weight parts. Characteristics and evaluation results of the film obtained are shown in the following Table 5.

**Comparative Example 9**

A film was obtained by the same method as embodiment 1, except that the polyester raw material in the mixture was changed to a blend of polyester (1) and polyester (3) at a ratio of 40:60, and the carbon black master batch (B-MB 1) of the mixture was changed to carbon black master batch (B-MB2). The characteristics and evaluation results of the film obtained are shown in the following Table 6.

**Comparative Example 10**

A film was obtained by the same method as embodiment 1, except that the polyester raw material in the mixture was changed to the polyester (6). The characteristics and evaluation results of the film obtained are shown in the following Table 6.

**Comparative Example 11**

A film was obtained by the same method as embodiment 1, except that the polyester raw material in the mixture was changed to the polyester (3). The characteristics and evaluation results of the film obtained are shown in the following Table 6.

**Comparative Example 12**

A film was obtained by the same method as embodiment 1, except that the polyester raw material in the mixture was changed to a blend of polyester (2) and polyester (4) at a ratio of 40:60. The characteristics and evaluation results of the film obtained are shown in the following Table 6.

**Comparative Example 13**

A film was obtained by the same method as embodiment 1, except that an amount of the carbon black master batch in the mixture was changed to 0.0 weight parts. The characteristics and evaluation results of the film obtained are shown in the following Table 6.

**Comparative Example 14**

A film was obtained by the same method as embodiment 1, except that an amount of the carbon black master batch in the mixture was changed to 0.50 weight parts. The characteristics and evaluation results of the film obtained are shown in the following Table 6.

## Table 5

| | | | Embodiments | | | | | 13 | | 14 |
|---|---|---|---|---|---|---|---|---|---|---|
| | | | 8 | 9 | 10 | 11 | 12 | Outermost layer | Middle layer | |
| Formulation Ratio | Polyester | 1 | — | — | — | — | — | — | — | — |
| | | 2 | 78 | 97.5 | 39 | 39.6 | 39.6 | 39.0 | 40 | 79.48 |
| | | 3 | 19.5 | — | — | — | — | — | — | 19.87 |
| | | 4 | — | — | 58.5 | 59.5 | 59.5 | 58.5 | 60 | — |
| | | 5 | — | — | — | — | — | — | — | — |
| | | 6 | — | — | — | — | — | — | — | — |
| | B-MB1 | | 2.5 | 2.5 | 2.5 | 0.9 | 0.9 | 2.5 | — | 0.646 |
| | B-MB2 | | — | — | — | — | — | — | — | — |
| Evaluation | Film thickness (μm) | | 50 | 50 | 50 | 50 | 250 | 250 (=25/200/25) | | 50 |
| | Concentration of black pigment (g/m²) | | 0.34 | 0.36 | 0.37 | 0.13 | 0.64 | 0.38 | | 0.09 |
| | Concentration of terminal carboxyl groups (eq/ton) | | 22 | 22 | 23 | 22 | 22 | 21 | | 21 |
| | Concentration of catalyst (ppm) | P | 29 | 0 | 90 | 87 | 87 | 84 | | 28 |
| | | Sb | 334 | 334 | 334 | 334 | 334 | 334 | | 334 |
| | Tensile elongation maintenance ratio | | ◎ | ○ | ○ | ○ | ○ | ○ | | ◎ |
| | Visable light beam transmissivity (550 nm) | Value | 1.2 | 1.2 | 1.1 | 27.8 | 0.0 | 1.16 | | 30.3 |
| | | Evaluation | ◎ | ◎ | ◎ | ○ | ◎ | ◎ | | ○ |
| | Transmission density | Value | 2.19 | 2.31 | 2.05 | 0.60 | 3.20 | 2.31 | | 0.45 |
| | | Evaluation | ◎ | ◎ | ◎ | ○ | ◎ | ◎ | | ○ |

The Transmission density values obtained were evaluated according to the following criteria:

◎: Transmission density is 2.0 or higher

◯: Transmission density is from 0.4 to 2.0

△: Transmission density is from 0.1 to 0.4

✕: Transmission density is less than 0.1

**Table 6**

| | | | Comparative Examples | | | | | |
|---|---|---|---|---|---|---|---|---|
| | | | 9 | 10 | 11 | 12 | 13 | 14 |
| Formulation Ratio | Polyester | 1 | 39.0 | — | — | 9.8 | — | — |
| | | 2 | — | — | — | — | 80. | 79.6 |
| | | 3 | 58.5 | — | 97.5 | — | 20 | 19.9 |
| | | 4 | — | — | — | 87.7 | — | — |
| | | 5 | — | — | — | — | — | — |
| | | 6 | — | 97.5 | — | — | — | — |
| | B-MB1 | | — | 2.5 | 2.5 | 2.5 | — | 0.498 |
| | B-MB2 | | 2.5 | — | — | — | — | — |
| Evaluation | Film thickness (μm) | | 50 | 50 | 50 | 50 | 50 | 50 |
| | Concentration of black pigment (g/m$^2$) | | 0.35 | 0.32 | 0.34 | 0.35 | 0 | 0.07 |
| | Concentration of terminal carboxyl groups (eq/ton) | | 38 | 50 | 33 | 24 | 20 | 21 |
| | Concentration of catalyst (ppm) | P | 91 | 138 | 255 | 190 | 88 | 30 |
| | | Sb | 334 | 334 | 334 | 334 | 334 | 334 |
| | Tensile elongation maintenance ratio | | ✕ | ✕ | ✕ | ✕ | ◎ | ◎ |
| | Visable light beam transmissivity (550 nm) | Value | 1.3 | 1.2 | 1.3 | 1.2 | 76.9 | 46.2 |
| | | Evaluation | ◯ | ◯ | ◯ | ◯ | ✕ | △ |
| | Transmission density | Value | 2.27 | 2.33 | 2.29 | 2.22 | 0.00 | 0.375 |
| | | Evaluation | ◯ | ◯ | ◯ | ◯ | ✕ | △ |

In Table 6, the units for the formulation ratios are in weight%, and the concentration of terminal carboxyl groups and the concentration of catalyst are amounts in the polyester component.

It can be seen that a polyester film containing a black pigment and having the concentration of terminal carboxyl groups and the concentration of elemental phosphorus within a specific range will also have favorable light shielding properties and tensile properties after hydrolysis testing.

## Claims

1. A polyester film with an elemental phosphorus concentration of from 0 to 170 ppm, wherein the film comprises a concentration of terminal carboxyl groups of 26 eq/ton or less.

2. A polyester film according to Claim 1, additionally comprising a black pigment.

3. A polyester film according to Claim 1, additionally comprising 0.5 weight% or more of a white pigment wherein the value IV_P expressed in the following formula (1) is 0.57 or higher

$$IV\_P = IV\_L \div (1 - X/100) \qquad (1)$$

wherein, IV_L represents the limit viscosity of the polyester film, and X represents the white pigment concentration in weight%.

4. A polyester film according to Claim 1, additionally comprising 0.5 weight% or more of titanium dioxide.

5. A polyester film according to one of Claims 1-4, wherein the film comprises one or more phosphate compounds selected from phosphoric acid, phosphorous acid and esters thereof, phosphonate compounds, phosphinate compounds, phosphonite compounds, phosphinite compounds, preferably one or more phosphate compounds selected from orthophosphoric acid, dimethyl phosphate, trimethyl phosphate, diethyl phosphate, triethyl phosphate, dipropyl phosphate, tripropyl phosphate, dibutyl phosphate, tributyl phosphate, diamyl phosphate, triamyl phosphate, dihexyl phosphate, trihexyl phosphate, diphenyl phosphate, triphenyl phosphate, and ethyl azide phosphate.

6. A polyester film according to Claim 1 or 2, wherein the black pigment comprises one or more of the following: carbon black, carbon nanotubes, aniline black, black iron oxide, and other black pigments, preferably in an amount of 0.1 g or more per 1 $m^2$ of polyester film.

7. A polyester film according to one of Claims 1, 3, 4, 5, or 6 wherein the average particle size of the white pigment is 0.25 $\mu$m or larger.

8. A polyester film according to one of Claims 1-7, wherein the limiting viscosity of the raw material polyester used in the polyester film is from 0.64 to 1.20 dl/g.

9. A polyester film according to one of Claims 1-8, wherein the film has two, three, or more layers.

10. A polyester film according to one of Claims 1-9, which has a thickness of 20 to 250 $\mu$m.

11. A process for the manufacture of a polyester film according to claim 1, wherein polyester chips are fed into a kneader extruder and melted by heating, then the melted polyester is extruded from a die, and then rapidly hardened on a rotating cooling drum to obtain an unoriented sheet which is stretched in two axial directions to form a film which is then heat treated and wound up.

12. The process of claim 11, wherein, in a case where a single screw extruder is used, the polyester raw material is dried prior to extrusion to a moisture content of 50 ppm or less; and, in the case that a twin screw extruder is used, which is equipped with a vent port, reduced pressure is maintained of 40 hectopascals or less.

13. Use of a film according to one of claims 1-10 in a solar cell.

**14.** The use of claim 13 as a back sheet.

European Patent Office
Europäisches Patentamt
European Patent Office
Office européen des brevets

## EUROPEAN SEARCH REPORT

Application Number

EP 10 00 1591

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/096612 A1 (TEIJIN LTD [JP]; KINOSHITA EIJI [JP]; KISHINO TOMOYUKI [JP]; KOHNO KAZ) 14 August 2008 (2008-08-14) * paragraphs [0069] - [0075], [0091], [0124] - [0134], [0259] * * examples 31,33,37-39 * | 1-14 | INV. C08J5/18 C08L67/00 |
| Y,P | & EP 2 116 560 A1 (TEIJIN LTD [JP]) 11 November 2009 (2009-11-11) * paragraphs [0069] - [0075], [0091], [0124] - [0134], [0259] * * examples 31,33,37-39 * ----- | 1-14 | |
| X | EP 0 962 483 A1 (TEIJIN LTD [JP]) 8 December 1999 (1999-12-08) | 1,8,10 | |
| Y | * example 17 * ----- | 1-14 | |
| X | EP 0 625 539 A1 (TORAY INDUSTRIES [JP]) 23 November 1994 (1994-11-23) | 1,5,8-10 | |
| Y | * example 1 * ----- | 1-14 | TECHNICAL FIELDS SEARCHED (IPC) C08J C08L |

The present search report has been drawn up for all claims

| Place of search | Date of completion of the search | Examiner |
|---|---|---|
| Munich | 27 May 2010 | Kaul-Buchberger, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 221 336 A1**

**ANNEX TO THE EUROPEAN SEARCH REPORT
ON EUROPEAN PATENT APPLICATION NO.**

EP 10 00 1591

27-05-2010

| Patent document cited in search report | | Publication date | Patent family member(s) | | Publication date |
|---|---|---|---|---|---|
| WO 2008096612 | A1 | 14-08-2008 | EP | 2116560 A1 | 11-11-2009 |
| | | | KR | 20100014348 A | 10-02-2010 |
| | | | US | 2010120967 A1 | 13-05-2010 |
| EP 0962483 | A1 | 08-12-1999 | DE | 69827607 D1 | 23-12-2004 |
| | | | DE | 69827607 T2 | 03-11-2005 |
| | | | WO | 9931168 A1 | 24-06-1999 |
| | | | TW | 539703 B | 01-07-2003 |
| | | | US | 6472046 B1 | 29-10-2002 |
| EP 0625539 | A1 | 23-11-1994 | CA | 2129435 A1 | 05-06-1994 |
| | | | DE | 69331734 D1 | 25-04-2002 |
| | | | DE | 69331734 T2 | 08-05-2003 |
| | | | WO | 9413732 A1 | 23-06-1994 |
| | | | US | 5922164 A | 13-07-1999 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63137927 B
- JP H2206622 B
- JP S62241928 B
- JP S63193934 B
- JP 2006212925 A
- JP 2002302595 A
- JP 2003152206 A

- JP H9227767 B
- JP S38152220 B
- JP H83428 A
- JP H11186575 B
- JP S595216 B
- JP S59217755 B


**Non-patent literature cited in the description**

- **Kazuo Yuki.** Handbook of Saturated Polyester Resins. Kosaido Co., Ltd, 1989